# EUROPEAN PATENT APPLICATION

(11) **EP 1 983 449 A1**
(43) Date of publication of application: **22.10.2008**
(21) Application number: 08007623.5
(22) Date of filing: 18.04.2008
(51) Int. Cl.: G06F 17/30

(54) **Systems and methods to generate WEB server files from generic view definitions**

(30) Priority: 20.04.2007 US 925539 P
(71) Applicant: Siemens Energy & Automation, Inc., Alpharetta, GA 30005-4437 (US)
(72) Inventor: DeMesa, Jesse G., Lake Forest CA 92630 (US); Sjolander, Stephen, Laguna Niguel CA 92670 (US)
(74) Representative: Fischer, Michael

(57) **Abstract**

Some embodiments include reception (S210) of a Uniform Resource Locator, determination (S220) to convert a markup-language file associated with the Uniform Resource Locator to a Web format, conversion (S230) of the markup-language file to the Web format, storage (S240) of the converted file in a Web server file system (382), and provision (S250) of the converted file to a Web client from which the Uniform Resource Locator was received.

## Description

### CROSS REFERENCE TO RELATED APPLICATIONS

This application claims priority to Provisional Application Serial No. 60/925,539, filed April 20, 2007 and entitled "Transformation of General Reusable View Definitions to Web-Based Device Specific Representations", the contents of which are incorporated by reference herein for all purposes.

### BACKGROUND

### Field

The embodiments described below generally relate to the generation of Web pages and handling of Web page requests.

### Discussion

Web-based protocols offer a standardized platform for providing requested information to users in graphical form. Generally, any Web browser executing on any client device may request a Web page, receive the requested Web page, and display the requested Web page. However, various client devices exhibit different display properties and capabilities.

As a result, a Web page displayed by one client device may appear quite different from the identical Web page as displayed by a different client device. Some client devices may lack rendering capabilities needed to display certain Web pages.

A Web developer may desire to develop Web pages that are compatible with the rendering capabilities of all anticipated hardware clients. Moreover, a Web developer may opt to take advantage of unique capabilities and form factors of certain hardware clients. Both of these motivations require device-specific Web page development.

Device-specific development presents obvious inefficiencies. In addition, current techniques for non-code-based Web page development may virtually preclude device-specific development. For example, some conventional systems allow for the development of interfaces based on logical definitions of Web page layouts. These definitions may be based on users' roles and may be developed and reused without programming knowledge.

What is needed are systems which may more efficiently provide for the development and management of reusable content and leverage differences in web-based rendering technologies provided by various web-enabled client devices.

### SUMMARY

In order to address the foregoing, some embodiments concern a system, a method, an apparatus, a medium storing processor-executable process steps, and means to receive a Uniform Resource Locator, determine to convert a markup-language file associated with the Uniform Resource Locator to a Web format, convert the markup-language file to the Web format, store the converted file in a Web server file system, and provide the converted file to a Web client from which the Uniform Resource Locator was received.

In some aspects, determining to convert the markup-language file includes determining that a Web-formatted file associated with the Uniform Resource Locator is not stored in the Web server file system, and determining that the markup-language file is associated with the Uniform Resource Locator. Additionally or alternatively to the above aspect, determining that the Web-formatted file associated with the Uniform Resource Locator is not stored in the Web server file system may include inspecting a hierarchical tree of Uniform Resource Locators, the hierarchical tree associating each of the Uniform Resource Locators with zero or more respective Web-formatted files stored in the Web server file system.

According to some aspects, determining to convert the markup-language file includes determining that a Web-formatted file associated with the Uniform Resource Locator is stored in the Web server file system, determining that the markup-language file is associated with the Uniform Resource Locator, and determining that the markup-language file is more recent than the Web-formatted file. Moreover, storing the converted file may include replacing the Web-formatted file with the converted file in the Web server file system.

The determination that the Web-formatted file associated with the Uniform Resource Locator is stored in the Web server file system may include inspection of a hierarchical tree of Uniform Resource Locators, the hierarchical tree associating each of the Uniform Resource Locators with zero or more respective Web-formatted files stored in the Web server file system.

The appended claims are not limited to the disclosed embodiments, however, as those in the art can readily adapt the teachings herein to create other embodiments and applications.

### BRIEF DESCRIPTION OF THE DRAWINGS

The construction and usage of embodiments will become readily apparent from consideration of the following specification as illustrated in the accompanying drawings, in which like reference numerals designate like parts, and wherein:
FIG. 1 is a block diagram of a system architecture according to some embodiments;
FIG. 2 is a flow diagram of process steps according to some embodiments;
FIG. 3 is a block diagram of a server according to some embodiments;
FIG. 4 is a flow diagram of process steps according to some embodiments;
FIG. 5 illustrates conversion of markup-language files to Web-formatted files according to some embodiments; and
FIG. 6 is a block diagram of a system according to some embodiments.

### DETAILED DESCRIPTION OF SPECIFIC EMBODIMENTS

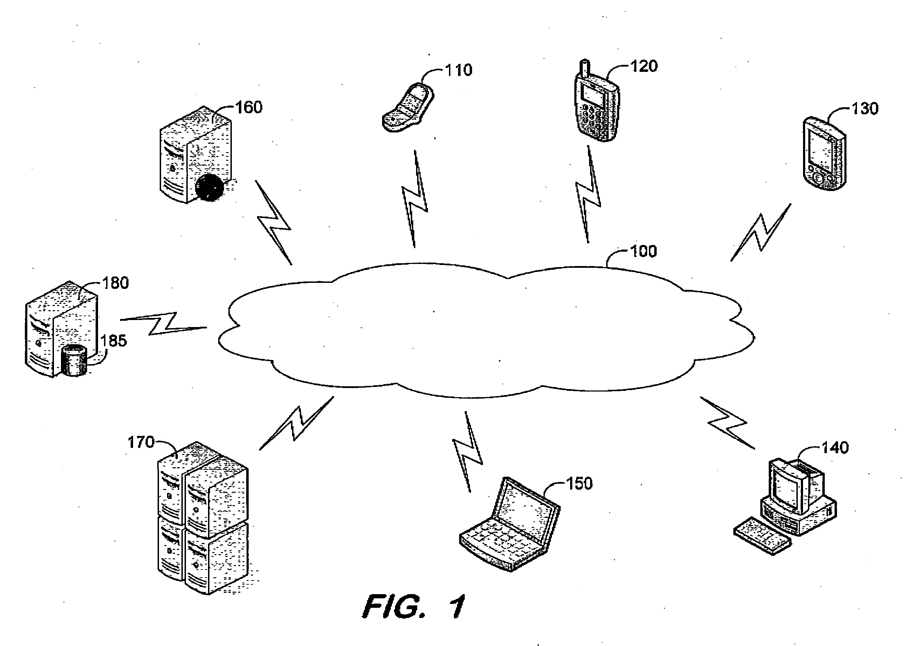

FIG. 1 illustrates a network architecture of a system according to some embodiments of the present invention. Each illustrated device is capable of communication with network 100, which may comprise the Internet as well as any number of other public and/or private networks. Two or more of illustrated devices may be located remote from one another and may communicate with one another via any known manner of network(s) and/or a dedicated connection. Moreover, each device may comprise any number of hardware and/or software elements suitable to provide the functions described herein as well as any other functions. Other topologies may be used in conjunction with other embodiments.

Client devices 110 through 150 may be equipped with any combination of hardware and software (e.g., a Web browser) to enable communication with Web server 160. According to some embodiments, Web server 160 supports HyperText Transfer Protocol (HTTP/HTTPS) communication with devices 110 through 150. Client devices 110 through 150 may request and receive Web pages from Web server 160 as described below.

In the illustrated embodiment, Web server 160 may communicate with application servers 170 to provide requested Web pages. Application servers 170, in turn, may interface with database management system 180 to access and manipulate data stored in relational database 185. Embodiments are not limited to the configuration of FIG. 1.

For example, communication network 100 may comprise any number of different systems for transferring data, including a Local Area Network (LAN), a Metropolitan Area Network (MAN), a Wide Area Network (WAN), a proprietary network, a Public Switched Telephone Network (PSTN), a Wireless Application Protocol (WAP) network, a wireless LAN (e.g., in accordance with the Institute of Electrical and Electronics Engineers 802.11 standard), a Bluetooth network, an Infrared Radiation (IR) network, and/or an IP network such as the Internet, an intranet or an extranet. As used herein, the term "communication" can refer to wired and/or wireless communication as appropriate.

In other embodiments, the devices of FIG. 1 are connected differently than as shown. For example, some or all of the devices may be connected directly to one another. Of course, embodiments of the invention may include devices that are different from those shown. It should also be noted that although the devices are shown in communication with each other, the devices need not be constantly exchanging data. Rather, communication may be established when necessary and severed at other times or always available but rarely used to transmit data. Moreover, although the illustrated communication links appear dedicated, it should be noted that each of the links may be shared by other devices.

Each of elements 110 through 185 may be implemented using any combination of hardware and software, and one or more of such elements may share common hardware and/or software. One or more of elements 110 through 185 may be located remote from one or more other elements, and portions of a single element may be remote from other portions of the single element.

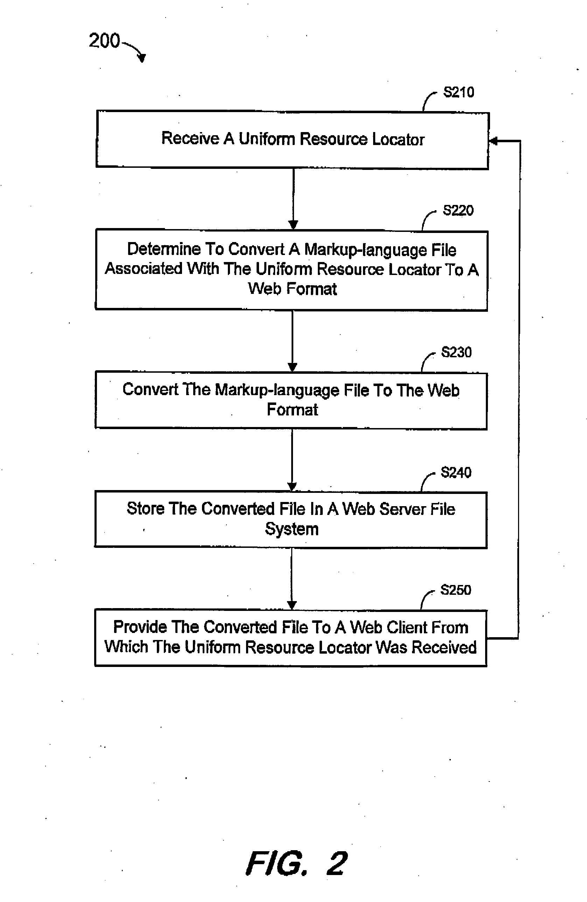

FIG. 2 illustrates process 200 according to some embodiments. Process 200 may be embodied in one or more software or hardware elements and executed, in whole or in part, by any device or by any number of devices in combination, including but not limited to those devices illustrated in FIG. 1. Moreover, some or all of process 200 may be performed manually.

Process 200 and the other processes described herein may be embodied in processor-executable program code read from one or more of a computer-readable medium, such as a floppy disk, a CD-ROM, a DVD-ROM, a Zip™ disk, a magnetic tape, or a signal encoding the process steps, and then stored in a compressed, uncompiled and/or encrypted format. In alternative embodiments, hard-wired circuitry may be used in place of, or in combination with, processor-executable program code for implementation of processes according to some embodiments. Thus, embodiments are not limited to any specific combination of hardware and software.

Initially, at S210, a Uniform Resource Locator (URL) is received. For example, Web server 160 of FIG. 1 may receive an HTTP request including a URL from one of client devices 110 through 150. The URL is associated with an IP address supported by Web server 160 and indicates a particular requested Web page.

Next, at S220, it is determined to convert a markup-language file associated with the URL to a Web format Several scenarios for reaching this determination are described in detail below. According to the present example, however, a markup-language file associated with the requested Web page is identified and flagged for conversion to a Web format. The markup-language file may comply with a standard markup language (e.g., HyperText Markup Language), a proprietary extensible Markup Language (XML format), or another markup language that is or becomes known. In some embodiments, the markup-language file represents a view or view part.

A "view part", as used herein, is a logical definition of presentation content which is to be displayed to users and may be role-based. A view part may therefore lack programming details, data binding or network connection details, or programming logic. A view part may be a subset of a Web page to appear in a browser window. A view comprises an entire page of information including one or more view parts. View parts may be reusable within other view parts or views to create pages containing information relevant to a user's business decisions and/ or role.

The markup-language file is converted to the Web format at S230. Possible techniques for such conversion include style sheets and hard-coded conversion algorithms. For example, Extensible Stylesheet Language Transformations (XSLT) may be used at S230 to convert the markup-language file from proprietary XML to an Active Server Pages (ASP) format.

The conversion at S230 may be based at least in part on a context of the Web client from which the URL was received. The context may be determined from the URL and may include one or more of display dimensions, display resolution, current language, browser version, versions of underlying software, and user role. With reference to the foregoing examples, the style sheets or conversion algorithms may take the context into account when generating the converted file.

The converted file is stored in a Web server file system at S240, and is provided to a Web client from which the URL was received at S250. Storage of the converted file in the Web server file system may be required in order for Web server 160 to transmit the converted file to the client device. Flow may then return to S210 to await reception of another URL.

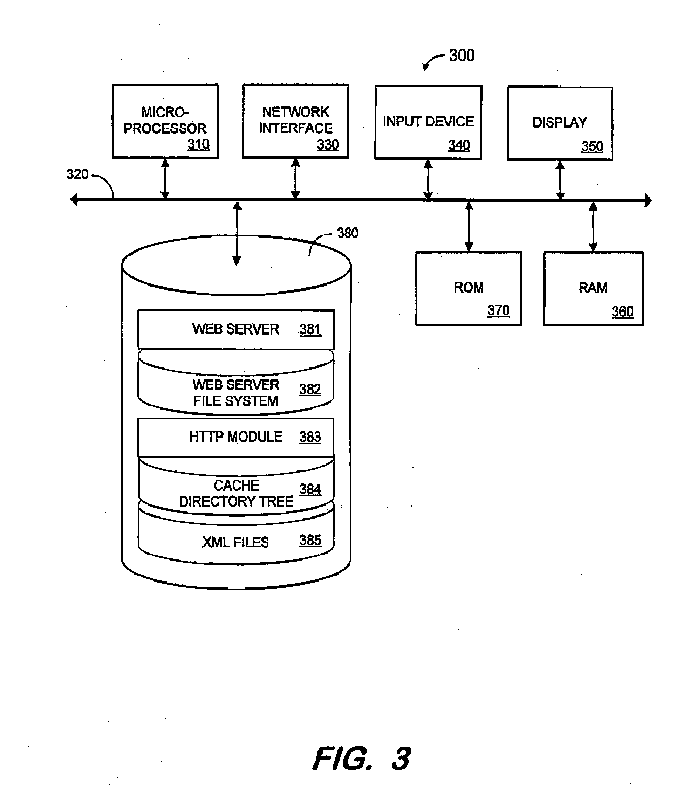

Some embodiments of the foregoing may efficiently leverage web-based rendering technologies encountered on various web-enabled client devices and provide for the efficient development and management of reusable content. The operation of some of these embodiments is described in more detail below with respect to FIGS. 3 through 5.

FIG. 3 is a block diagram of an internal architecture of server 300 according to some embodiments. Web server 160 of FIG. 1 may be embodied by server 300, but embodiments are not limited thereto.

Server 300 includes microprocessor 310 in communication with communication bus 320. Microprocessor 310 may comprise one or more suitable microprocessors and is used to execute processor-executable program code so as to control the elements of server 300 to provide functionality such as that described herein.

Also in communication with communication bus 320 is network interface 330. Network interface 330 is used to receive data from and to transmit data to devices external to Web server 300. Network interface 330 is therefore preferably configured with hardware suitable to physically interface with desired external devices and/or network connections. For example, network interface 330 may comprise an Ethernet connection to a local area network through which server 300 may transmit and receive information over communication network 100.

Input device 340 and display 350 are also in communication with communication bus 320. Any known input device may comprise input device 340, including a keyboard, mouse, touch pad, voice-recognition system, or any combination of these devices. Information may also be input to server 300 via network interface 330. Display 350 may be an integral or separate CRT display, flat-panel display or the like used to present graphics and text in response to commands issued by microprocessor 310.

RAM 360 is connected to communication bus 320 to provide microprocessor 310 with fast data storage and retrieval. In this regard, processor-executable program code being executed by microprocessor 310 is typically stored temporarily in RAM 360 and executed therefrom by microprocessor 310. ROM 370, in contrast, provides storage from which data can be retrieved but to which data cannot be stored. Accordingly, ROM 370 may be used to store invariant process steps and other data, such as basic input/output instructions and data used during boot-up of server 300 or to control network interface 330. One or both of RAM 360 and ROM 370 may communicate directly with microprocessor 310 instead of over communication bus 320.

Data storage device 380 stores, among other data, processor-executable program code of Web server 381. As such, server 300 may execute program code of Web server 381 to receive requests for Web pages from Web clients and to transmit the requested Web pages to the Web clients. Program code of Web server 381 may also include code to perform one or more functions described herein with respect to process 200 and process 400.

Web server 381 may comprise, in some embodiments, Internet information Server® product from Microsoft Corporation. Web server 381 may support one or more Web pages formats, including but not limited to formats compliant with the ASP.NET architecture.

Web server file system 382 comprises files that Web server 381 may serve to Web clients. Such files include Web-formatted files and may be stored in a hierarchical structure known to Web server 381. For example, Web server file system 382 may include a grouping of .aspx files representing views and a grouping of .ascx files representing view parts.

HTTP module 383 comprises processor-executable program code to intervene in an HTTP transaction conducted by Web server 381. For example, after an HTTP request including a URL is received by Web server 381, HTTP module 383 may determine whether a Web-formatted file associated with the URL is stored in Web server file system 382. HTTP module 383 may also identify a markup-language file that is associated with the URL.

Cache directory tree 384 may be used to determine whether a Web-formatted file associated with the URL is stored in Web server file system 382. In this regard, cache directory tree 384 may comprise a hierarchical tree of URLs which associates each of the URLs with zero or more respective Web-formatted files stored in Web server file system 382. When a URL is received, HTTP module 383 inspects cache directory tree 384 to determine if a Web-formatted file corresponding to the URL is stored in Web server file system 382.

XML files 385 comprise markup-language files associated with each URL supported by Web server 381. The markup-language files may comprise generic representations of views and view parts. The markup-language files may be used to generate device-specfic Web-formatted files according to some embodiments. As a result, any revisions to the markup-language files may efficiently propagate to the Web-formatted files to be transmitted to client devices.

HTTP module 383 may inspect XML files 385 to identify a markup-language file that is associated with a received URL. In some embodiments, HTTP module 383 may also convert the identified markup-language file to a Web format and store the converted file in an appropriate location of Web server file system 382 (i.e., a location corresponding to the received URL).

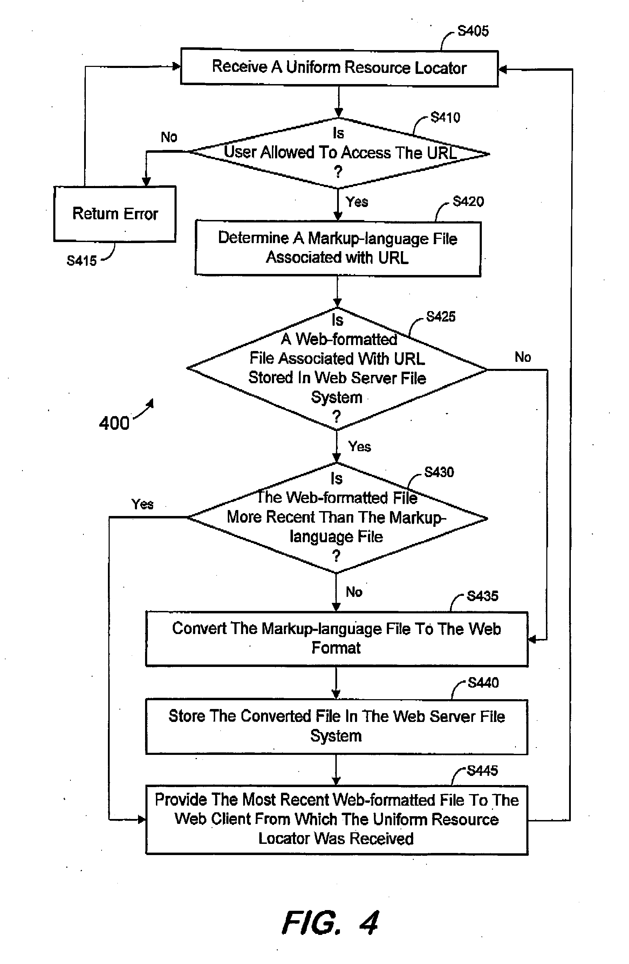

FIG. 4 illustrates process 400 according to some embodiments. Process 400 may be embodied in one or more software or hardware elements and executed, in whole or in part, by any device or by any number of devices in combination, including by server 300.

A URL is received at S405. Server 300 may execute program code of Web server 381 to receive an HTTP request including a URL from a Web client at S405. At S410, it is determined whether a user of the Web client is allowed to access the URL. Any authorization or other security mechanism may be used in the determination at S410. If the user is not allowed to access the URL, an error is returned to the Web client at S415. Flow then returns to S405 to await reception of another URL.

If the determination at S41 0 is affirmative, a markup-language file associated with the URL is determined at S420, According to some embodiments, HTTP module 383 takes over processing of the received HTTP request at S420. For example, HTTP module 383 may receive the BeginRequest event of the HTTP transaction.

HTTP module 383 may inspect XML files 385 at S420 to identify a markup-language file that is associated with a received URL. As previously mentioned, the markup-language file may comply with a standard format, a proprietary format, or another markup language that is or becomes known. In some embodiments, the markup-language file represents a view or view part.

Next, at S425, HTTP module 383 may determine whether a Web-formatted file associated with the URL is stored in Web server file system 382. HTTP module 383 may inspect cache directory tree 384 at S425 to determine if a Web-formatted file corresponding to the URL is stored in Web server file system 382. Flow proceeds to S430 if such a Web-formatted file is stored in Web server file system 382.

At S430, it is determined whether the identified Web-formatted file is more recent than the markup-language file determined at S420. Such a determination may comprise comparing the "modified" timestamps of each file. If the Web-formatted file is not more recent than the markup-language file, it is assumed that the markup-language file reflects updates that aren't represented in the Web-formatted file. Accordingly, the more-recent markup-language file is converted to the Web format at S440. As shown in FIG. 4, the markup-language file is also converted to the Web format directly after S425 if no Web-formatted file is determined to be associated with the URL in the Web server file system.

The markup-language file is converted to the Web format at S435. HTTP module 383 may convert the identified markup-language file to a Web format using style sheets and/or hard-coded conversion algorithms. Details of the conversion depend on the syntax of the markup-language, which may be proprietary, and the desired Web format. The conversion may be based at least in part on a context of the Web client from which the URL was received. The context may be determined from the HTTP request and/or the URL and may include one or more of display dimensions, display resolution, current language, browser version, versions of underlying software, and user role.

The converted file is stored in a Web server file system at S440, and is provided to the Web client from which the URL was received at S445. ASP.NET HTTP Handlers for .aspx and .ascx file extensions may require storage of the converted files in file system 382 in order to compile the files into instances of Page and UserControl.

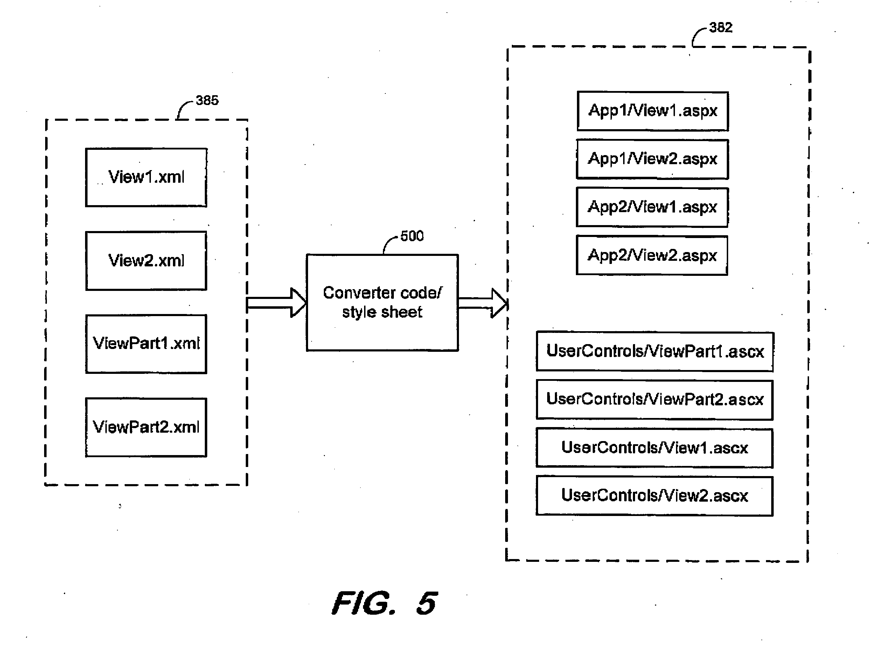

FIG. 5 is a block diagram illustrating conversion of markup-language files 385 to Web-formatted files and storage of the converted files in Web server file system 382 according to some embodiments. XML files 385 of FIG. 5 are generic representations of views and view parts. Code/style sheet 500 may be used to convert one or more of files 385 to one or more of files 382 at S435. One of files 385 may be converted to a .aspx file or a .ascx file depending upon the above-described context.

The converted file is stored in a hierarchical directory of file system 382. This directory reflects cache directory tree 384 used by HTTP module 383 as described above. Flow may return to S405 from S445 to await reception of another URL.

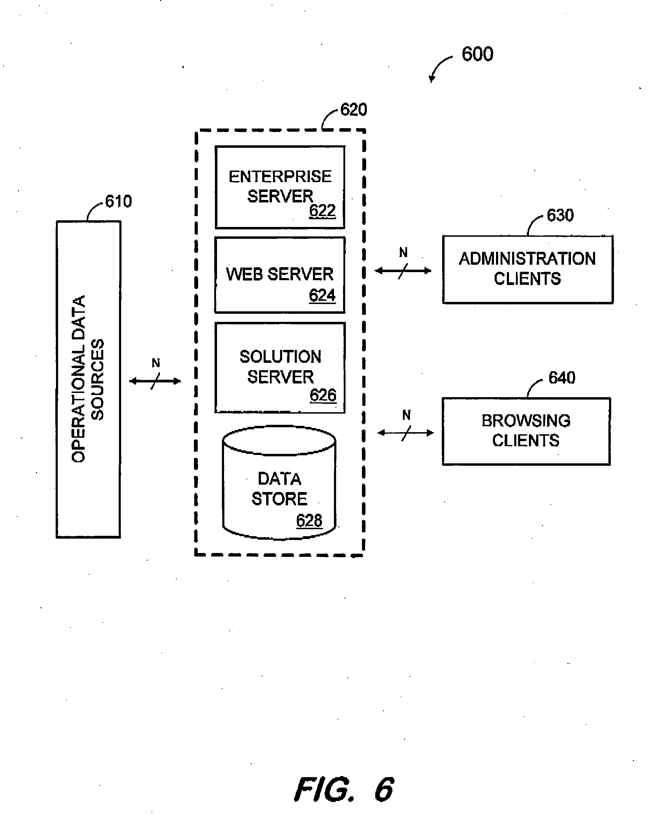

FIG. 6 illustrates an architecture of system 600 according to some embodiments. It should be noted that other architectures may be used in conjunction with other embodiments. System 600 includes operational data sources 610 in communication with application environment 620. Also in communication with application environment 620 are administration clients 630 and browsing clients 640.

System 600 may be used to aggregate and view real and/or near-real time operations data arising from the operation of an industrial plant The operations data may represent any type of operation, including but not limited to batch processes, discrete processes, and/or continuous industrial processes employed in the oil industry (e.g., in an oil refinery), gas industry, and/or chemical industry.

In this regard, the various embodiments described herein can be employed in a wide variety of industries and operational facilities. Any industrial process with differing types of operations data may supply data to systems utilizing the invention. For instance, facilities involved with natural resource refinement and procurement, oil and gas procurement, oil and gas refinement, chemical synthesis and refinement, water treatment, power generation, power transmission, food and beverage processing, raw materials processing (e.g. pulp, lumber, metals, and minerals), agricultural processing and materials processing (e.g. steel mills and foundries) may be suited to utilize platforms and software built upon concepts described herein. Additionally, facilities involved in finished goods manufacturing and production such as product assembly lines may utilize one or more embodiments or systems with such features.

These facilities may have various assets, equipment, machinery, flows etc. that produce operations data which may be continuous or discrete and may involve operations data that is presented in batches. Examples include pumps, motors, tanks, pipelines, mills, lathes, mixers, assembly lines, and so on. Operations data may include data from machinery, assets, process historians, maintenance systems, enterprise resource planning systems and the like. Examples of such data include pressure, temperature, capacities, volumes, rates of flow, production totals, inventories, performance indicators and the like.

Operational data sources 610 comprise various data sources, including but not limited to plant floor production systems, enterprise resource planning data systems, and other data systems. Operational data sources 610 may support one or more proprietary interfaces for accessing the data stored therein. An example of such an interface according to some embodiments is an SAP™ Business Application Interface. Operational data sources 610 may also provide one or more non-proprietary mechanism for accessing stored data. The stored data may represent any type of operation, including but not limited to continuous industrial processes employed in the oil, gas, and/or chemical industries.

Application environment 620 may transmit queries for data to operational data sources 610. In response, operational data sources 610 acquire and transmit the data to application environment 620. Application environment 620 may comprise enterprise server 622, Web server 624, solution server 626, and data store 628. Application environment 620 may comprise a single server device or multiple devices. In various embodiments, enterprise server 622 and solution server 626 comprise application programs developed in Java and/or C++ and running under Windows XP/NT/2000/2003.

Web server 624 manages data communication between application environment 620, administration clients 630, and browsing clients 640. According to some embodiments, Web server 624 may comprise the electronic files described with respect to data storage device 380 and may perform process 200 and/or process 400 described above. One or more administration clients 630 and browsing clients 640 may execute one or more Web clients to interact with Web server 624 according to some embodiments. Clients 630 and 640 may also execute Java applets to interact with Java servlets of Web server 624.

Solution server 626 is used to access data from operational data sources 610. In some embodiments, solution server 626 includes connection groups and connection processes. A connection group includes one or more object instances, each of which is associated with a particular data source of operational data sources 610. Different connection groups are associated with different data sources.

A connection process comprises processor-executable program code to retrieve data from a particular type of data source (e.g., an SAP R/3™ server). A connection process may comply with standard or proprietary protocols, including but not limited to ODBC, JDBC, OPC DA, OPC HDA, OPC AE, and Web Services. Program code to retrieve data from a particular type of data source may be provided in a library by an owner of a proprietary interface for accessing the particular type of data source.

Accordingly, several different connection groups may use a same connection process to access their respective data sources. Moreover, each object instance includes scripts (e.g. Structured Query Language scripts) to populate itself based on retrieved data. Solution server 626 manages the objects, connection groups and connection processes to access data that is acquired and stored by disparate systems of operational data sources 610.

Solution server 626 may transmit the data acquired from operational data sources 610 to data store 628 for storage according to some embodiments. Data store 628 may store any data used during the operation of application environment 620. Data may be stored in data store 628 according to any currently- or hereafter-known protocol for storing data, including but not limited to a class-based component and view model. Data store 628 may comprise a front-end application that is usable to access and/or manage the data stored therein. Such a front-end application may support Structured Query Language commands or the like. According to some embodiments, data store 628 may receive data directly from operational data sources 610.

Commonly-assigned U.S. Patent No. 6,700,590 describes a system to use a class-based object and view model to collect and display data received from multiple heterogeneous sources. This system encapsulates received point or relational data as objects, which are instantiations of defined components. The use of components and objects may provide reusability, consistency, inheritance and other benefits known to those familiar with object-oriented techniques. The component model may be established and utilized in any manner, including but not limited to those specified in aforementioned U.S. Patent No. 6,700,590 and/or U.S. Patent No. 7,069,514, the contents of which are herein incorporated by reference for all purposes. The component model may follow any suitable modeling protocol or format; including those mentioned in the foregoing references.

Data store 620 may therefore receive definitions of objects and/or object collections from solution server 626. Each object and/or object collection may comprise an instantiation of a component defined in the component model. For example, a component may represent a generic pump, with members of the component representing data related to the pump, such as name, location, speed, temperature, etc. An object (or object collection) that is instantiated based on this component may represent a specific physical pump (or several specific physical pumps).

In some embodiments, the elements of FIG. 6 are connected differently than as shown, and each block shown is implemented by one or more hardware and software elements. The hardware and software elements of one or more blocks may be located remotely from each other. Some embodiments may include environments, systems, servers, and clients that are different from those shown.

Those in the art will appreciate that various adaptations and modifications of the above-described embodiments can be configured without departing from the scope and spirit of the claims. Therefore, it is to be understood that the claims may be practiced other than as specifically described herein.

## Claims

1. A method comprising:
receiving (S210) a Uniform Resource Locator;
determining (S220) to convert a markup-language file associated with the Uniform Resource Locator to a Web format;
converting (S230) the markup-language file to the Web format;
storing (S240) the converted file in a Web server file system (382); and
providing (S250) the converted file to a Web client from which the Uniform Resource Locator was received.

2. A method according to Claim 1, wherein determining to convert the markup-language file comprises:
determining (S425) that a Web-formatted file associated with the Uniform Resource Locator is not stored in the Web server file system; and
determining that the markup-language file is associated with the Uniform Resource Locator.

3. A method according to Claim 2, wherein determining that the Web-formatted file associated with the Uniform Resource Locator is not stored in the Web server file system comprises:
inspecting a hierarchical tree (384) of Uniform Resource Locators, the hierarchical tree associating each of the Uniform Resource Locators with zero or more respective Web-formatted files stored in the Web server file system.

4. A method according to Claim 1, wherein determining to convert the markup-language file comprises:
determining (S425) that a Web-formatted file associated with the Uniform Resource Locator is stored in the Web server file system;
determining that the markup-language file is associated with the Uniform Resource Locator; and
determining that the markup-language file is more recent than the Web-formatted file,
and wherein storing the converted file comprises:
replacing the Web-formatted file with the converted file in the Web server file system.

5. A method according to Claim 4, wherein determining that the Web-formatted file associated with the Uniform Resource Locator is stored in the Web server file system comprises:
inspecting a hierarchical tree (384) of Uniform Resource Locators, the hierarchical tree associating each of the Uniform Resource Locators with zero or more respective Web-formatted files stored in the Web server file system.

6. A method according to Claim 1, wherein the converted file comprises an Active Server Page file.

7. A method according to Claim 1, wherein a style sheet is used to convert the markup-language file to the Web format.

8. A method according to Claim 1, wherein the markup-language file is not stored in the Web server file system.

9. A method according to Claim 1, wherein converting the markup-language file comprises:
determining a context of the Web client; and
converting the markup-language file based on determined context.
